Europäisches Patentamt

European Patent Office

Office européen des brevets

(11) Veröffentlichungsnummer: **0 291 833 B1**

(12) **EUROPÄISCHE PATENTSCHRIFT**

(45) Veröffentlichungstag der Patentschrift: **06.05.92**

(21) Anmeldenummer: **88107552.7**

(22) Anmeldetag: **11.05.88**

(51) Int. Cl.⁵: **C08L 77/06**, C08K 13/04

(54) **Glasfaserverstärkte stabilisierte Polyamidformmasse.**

(30) Priorität: **22.05.87 DE 3717218**

(43) Veröffentlichungstag der Anmeldung:
**23.11.88 Patentblatt 88/47**

(45) Bekanntmachung des Hinweises auf die
Patenterteilung:
**06.05.92 Patentblatt 92/19**

(84) Benannte Vertragsstaaten:
**DE FR GB IT**

(56) Entgegenhaltungen:
EP-A- 0 193 023     EP-A- 0 229 382
EP-A-12 198 4       DE-A- 1 257 425
DE-A- 2 254 408     DE-A- 2 333 576
DE-A-12 455 91

(73) Patentinhaber: **BAYER AG**

**W-5090 Leverkusen 1 Bayerwerk(DE)**

(72) Erfinder: **Nielinger, Werner, Dr.**
**Bärenstrasse 21**
**W-4150 Krefeld(DE)**
Erfinder: **Füllmann, Heinz-Josef, Dr.**
**Am Schneeberg 31,**
**W-5653 Leichlingen 2(DE)**
Erfinder: **Kirsch, Jürgen, Dr.**
**Hahnenweg 1**
**W-5000 Köln 80(DE)**
Erfinder: **Bottenbruch, Ludwig, Dr.**
**Wöhlerstrasse 5**
**W-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 291 833 B1

**Beschreibung**

Gegenstand der Erfindung ist ein stabilisiertes, mit Glasfasern verstärktes Copolyamid aus Adipinsäure, Terephthalsäure und Hexamethylendiamin mit hoher Beständigkeit gegen die Einwirkung von Chemikalien bei erhöhten Temperaturen.

Mit Glasfasern verstärkte Polyamide zeichnen sich gegenüber unverstärkten Polyamiden durch höhere Formbeständigkeit in der Wärme sowie durch verbesserte Zugfestigkeit, Steifigkeit und Härte aus. Die höhere Wärmeformbeständigkeit kann aber nicht immer vollständig genutzt werden, weil bei den erforderlichen erhöhten Verarbeitungstemperaturen der glasfaserverstärkten Polyamide und beim Einsatz der Formteile über längere Zeiträume bei hohen Temperaturen eine Schädigung des Polyamids eintreten kann. Aus diesem Grunde werden glasfaserhaltige Produkte häufig stabilisiert. Die Einwirkung von Chemikalien kann die Polyamide zusätzlich schädigen. Der Verwendung von Polyamiden bei hohen Temperaturen als Rohstoff zur Herstellung von Gegenständen wie Leitungen, Rohren, Vorratsbehältern fur heiße Flüssigkeiten in technischen Apparaturen oder von Kühlerwasserkästen im Automobilbereich ist daher eine Grenze gesetzt. Es ist zur Zeit nicht möglich, die Temperatur der Kühlflüssigkeit weiter anzuheben, ohne daß man mit Schäden im Kühlsystem rechnen muß. Die bisher gemachten Vorschläge zur Verbesserung von Polyamiden sind noch nicht zufriedenstellend. Gemäß der EP-A-0 129 974 wird zwar durch Zusatz von Olefincopolymeren die Beständigkeit von glasfaserverstärktem Polyamid-66, -6 oder -610 gegen Chemikalien erwas erhöht, die Belastbarkeit dieser Polyamide bei höheren Temperaturen über längere Zeiträume wird durch diese Maßnahme jedoch nicht verbessert. In der DE-A-2 927 018 ist ein glasfaserverstärktes Polyamid-66 beschrieben, bei dem ein Teil der Adipinsäure durch Terephthalsäure ersetzt ist. Man erreicht dadurch bei der Extrusion ein verbessertes Fließverhalten und kann auf die Nachkalibrierung verzichten. Chemikalien- und Temperaturbeständigkeit der Copolyamide sind nach Angaben dieser Offenlegungsschrift zwar günstig, ein Hinweis auf eine verbesserte Wärmeformbeständigkeit der Polyamide ist der Offenlegungsschrift jedoch nicht zu entnehmen; der im Vergleich zum Polyamid-66 niedrigere Schmelzpunkt des Copolyamids läßt eher einen Rückgang der Wärmeformbeständigkeit vermuten. Verbesserte Polyamide, die gegebenenfalls mit Glasfaser verstärkt sein können sind bereits aus der DE-A-34 07 492 bekannt.

In der DE 1 245 591 werden glasfaserhaltige Polyamide, z.B. Polyamide auf Caprolactambasis, gegen eine oxidative Schädigung bei hohen Temperaturen (bei freiem Zutritt von Luft und Sauerstoff) mit einem Cu-I oder Cu-II-Salz einem Salz der Iodwasserstoffsäure und einem Phosphin stabilisiert.

In der EP 193 023 wird die Herstellung von aromatischen Copolyamiden (6T/6J/66-Terpolymere) beschrieben. Ohne Beispiel oder nähere Angaben wird u.a. die Zugabe von Stabilisatoren erwähnt.

Aufgabe der Erfindung war es, glasfaserverstärkte Polyamide bereitzustellen, die den gestiegenen Anforderungen genügen.

Gegenstand der Erfindung sind somit glasfaserhaltige Polyamidformmassen auf Basis Terephthalsäure, Adipinsäure und Hexamethylendiamin mit 30-45 Gew.-% Einheiten des Polyhexamethylenterephthalamids und 55 bis 70 Gew.-% Einheiten des Polyhexamethylenadipamids im Polyamid und 10-40 Gew.-% an beschlichteten, alkalifreien Glasfasern in der Polyamidmasse, dadurch gekennzeichnet, daß als Stabilisator gegen Einwirkung von Chemikalien bei höheren Tenperaturen 0,1 bis 2,5 Gew.-% eines Stabilisatorgemichs aus Kupfer(I)halogeniden, Alkalihalogeniden und Trialkyl-, Trialkyl- oder Tri(arylalkyl)phosphinen verwendet werden.

Besonders bevorzugte Polyamide sind die aus der DE-A-3 407 492 bekannten Copolyamide.

Die Polyamide nach der Erfindung enthalten vorzugsweise 37 bis 42 Gew.-% Einheiten von Polyhexamethylenterephthalamid und 58 bis 63 Gew.-% Einheiten des Polyhexamethylenadipamids gemäß DE-A-3 407 492.

Die Polyamide enthalten 10 bis 40, vorzugsweise 15 bis 35 Gew.-% Fasern aus handelsüblichem, beschlichtetem alkalifreiem Glas. Sie haben einen Durchmesser von im allgemeinen 8 bis 15 um und im allgemeinen ein Maximum der Faserlängenverteilung im Bereich von 20 bis 600 $\mu$m, vorzugsweise 40 bis 350 $\mu$m.

Geeignete Stabilisatoren sind Phosphine und Kupferverbindungen, in Kombination mit Alkalihalogeniden. Bevorzugte Stabilisatoren sind die aus der DE-A-1 245 591 bekannten Kombinationen aus kupferhaltigen Verbindungen mit Alkalihalogeniden und Phosphorverbindungen. Geeignete kupferhaltige Verbindungen sind insbesondere Kupfer-1-halogenide wie Kupferiodid und Kupferbromid. Bevorzugte Alkalihalogenide sind insbesondere Lithium-, Natrium- und Kaliumbromide sowie die entsprechenden -Iodide. Bevorzugte Phosphorverbindungen sind Triaryl-, Trialkyl- oder Tri-(arylalkyl)-phosphine wie das Triphenylphosphin, Tri-n-butylphosphin oder Phenyldimethylphosphin.

2

EP 0 291 833 B1

Es ist möglich, zusätzlich UV-Absorber oder andere Stabilisatoren, z.B. phenolische Antioxidantien, (cyclo)aliphatische, sterisch gehinderte Amine oder aromatische (Poly)amine, in Mengen von 0,2 bis 2,0 Gew.-%, vorzugsweise 0,25 bis 1,0 Gew.-%, zuzusetzen.

Das Stabilisatorgemisch ist enthalten in Mengen von 0,1 bis 2,5 Gew.-%, vorzugsweise 0,1 bis 1,5 Gew.-%, insbesondere 0,1 bis 1,0 Gew.-%, bezogen auf die Mischung.

Weiterer Erfindungsgegenstand ist die Verwendung der erfindungsgemäß stabilisierten Polyamidformmassen zur Herstellung von bei höheren Temperaturen gegen Einwirkung von Chemikalien, vorzugsweise gegen Einwirkung von Glycol und Wasser, beständigen Formteilen. Insbesondere dienen sie zur Herstellung von Kühlerwasserkästen.

Die Herstellung der Mischungen erfolgt auf handelsüblichen Maschinen, indem man eine gleichmäßige Mischung aus dem Copolyamid, den Glasfasern und den Stabilisatoren, die gegebenenfalls in Form eines Konzentrates eingesetzt werden können, direkt zu Formteilen verarbeitet. Wesentlich vorteilhafter ist es jedoch, die Komponenten in der Schmelze beispielsweise in einem Doppelwellenextruder zu mischen und das erhaltene Granulat zu Formteilen zu verarbeiten.

Die erfindungsgemäßen Produkte können die üblichen Zuschlagstoffe und Hilfsmittel enthalten, beispielsweise Gleit- und Entformungsmittel, Nukleierungsmittel, Flammschutzmittel und weitere Füllstoffe. Als Füllstoffe kommen Mikroglaskugeln, Kreide, Quarze wie Novaculit, ferner Silikate wie Asbest, Feldspat, Glimmer, Talkum, Wollastonit sowie Kaolin in calcinierter und nicht calcinierter Form in Betracht. Außerdem sind Farbstoffe und Pigmente zu nennen, ferner Schlagzähmodifikatoren, beispielsweise auf der Basis von Copolymerisaten des Ethylens oder gepfropften Kautschuklatices, beispielsweise auf Polybutadien- oder Poly(meth)acrylat-Basis. Derartige Schlagzähmodifikatoren werden beispielsweise in DE-A-2 622 973, EP-A-1245, EP-A-83 446 beschrieben.

Die erfindungsgemäßen Polyamide lassen sich ohne Schwierigkeiten auf handelsüblichen Maschinen verarbeiten. Man kann daraus Formkörper für technische Geräte, für den Maschinenbau und Automobilbau wie Spritzgießteile, Hohlkörper usw. herstellen, die mit heißen Chemikalien in Berührung kommen, insbesondere Kühlerwasserkästen.

Beispiel 1

68,4 Gew.-Teile Copolyamid aus Adipinsäure, Terephthalsäure und Hexamethylendiamin, 30 Gew.-Teile geschlichtete Glasfasern aus E-Glas (Silenka 8041), 1,4 Gew.-Teile einer Stabilisatormischung aus CuJ, KJ, Triphenylphosphin gemäß DE-A-1 245 591 als 10 %iges Konzentrat in PA 66 und 0,2 Gew.-Teile eines Entformungsmittels (Esterwachs aus Ethylenglykol mit Montansäuren) werden auf einem Doppelwellenextruder vom Typ ZSK 32 von Werner & Pfleiderer bei einer Massetemperatur von 304°C und einem Durchsatz von 10 kg/h compoundiert.

Das Copolyamid enthält 60 Gew.-% Einheiten des Poly(hexamethylenadipamids) und 40 Gew.-% Einheiten des Poly(hexamethylenterephthalamids). Es wurde gemäß DE-A-3 407 492 hergestellt. Die relative Viskosität des Copolyamids, gemessen an einer einprozentigen Lösung in m-Kresol bei 25°C in einem Ubbelohde-Viskosimeter, beträgt 3,1.

Aus dem verstärkten Polyamid hergestellte Prüfkörper werden in einem Autoklaven in einem Gemisch aus Ethylenglykol und Wasser (Mischungsverhältnis 1:1 Gew.-Teile) bei 120°C gelagert. Nach verschiedenen Zeiten werden Proben entnommen, an denen Schlagzähigkeit nach DIN 53 453 und Biegemodul nach DIN 53 457 bestimmt werden. Die Ergebnisse sind in der Tabelle angegeben.

Beispiel 2

Wie Beispiel 1, jedoch mit 2,8 Gew.-Teilen der Stabilisatormischung.

Beispiel 3

Wie Beispiel 1 mit 0,3 Gew.-Teilen Stabilisatormischung (kein Konzentrat in Polyamid).

Beispiel 4

Wie Beispiel 1, jedoch Lagerung bei 130°C.

3

Beispiel 5

Wie Beispiel 1, jedoch Lagerung bei 140°C.

Vergleichsbeispiel 1

Wie Beispiel 1, jedoch ohne Stabilisatorzusatz, Lagerung bei 120°C.

Die folgenden Vergleichsbeispiele wurden mit Polyamid-66 durchgeführt, und zwar in Analogie zu Beispiel 1. Die relative Viskosität von Polyamid-66 betrug 3,0, die Massetemperatur bei der Compoundierung 286°C.

Vergleichsbeispiel 2

Ohne Stabilisatorzusatz, Lagerung bei 120°C.

Vergleichsbeispiel 3

Der Stabilisatorzusatz entspricht dem von Beispiel 3.

Vergleichsbeispiel 4

Stabilisatorzusatz wie in Beispiel 1, Lagerung bei 130°C.

Vergleichsbeispiel 5

Stabilisatorzusatz wie in Beispiel 1, Lagerung bei 140°C.

In der folgenden Zusammenstellung ist die Zeit bis zum Beginn der Rißbildung angegeben:

Beispiel 4: Wenige Risse nach 35 Tagen
Beispiel 5: Nach 25 Tagen
Vergleichsbeispiel 2: Nach 16 Tagen

Tabelle

| Dauer der Lagerung (Tage) | Spritz-frisch | 2 | 10 | 21 | 26 | 35 | Lagerung bei °C |
|---|---|---|---|---|---|---|---|
| **Beispiel 1** | | | | | | | 120 |
| Schlagzähigkeit (kJ/m²) | 37 | 73 | 59 | 49 | 46 | | |
| E-Modul (MPa) | 7725 | 3058 | 3090 | 3077 | 3030 | | |
| **Beispiel 2** | | | | | | | 120 |
| Schlagzähigkeit (kJ/m²) | 42 | 77 | 66 | 54 | 51 | | |
| E-Modul (MPa) | 7916 | 2942 | 2977 | 3045 | 3062 | | |
| **Beispiel 3** | | | | | | | 120 |
| Schlagzähigkeit (kJ/m²) | 44 | 77 | 63 | 56 | | 53 | |
| E-Modul (MPa) | 8129 | 3086 | 3188 | 3355 | | 3385 | |
| **Vergleichsbeispiel 1** | | | | | | | 120 |
| Schlagzähigkeit (kJ/m²) | 31 | 86 | 55 | 39 | 30 | | |
| E-Modul (MPa) | 6413 | 1947 | 1908 | 2042 | 2158 | | |
| **Vergleichsbeispiel 2** | | | | | | | 120 |
| Schlagzähigkeit (kJ/m²) | 47 | 68 | 57 | 46 | 44 | 33 | |
| E-Modul (MPa) | 8145 | 3325 | 3861 | 4250 | 4328 | 4265 | |
| **Vergleichsbeispiel 3** | | | | | | | 120 |
| Schlagzähigkeit (kJ/m²) | 49 | 69 | 55 | 43 | 40 | | |
| E-Modul (MPa) | 8195 | 3929 | 3930 | 4161 | 4357 | | |
| **Beispiel 4** | | | | | | | 130 |
| Schlagzähigkeit (kJ/m²) | 46 | 96 | 67 | 46 | | 31 | |
| **Vergleichsbeispiel 4** | | | | | | | |
| Schlagzähigkeit (kJ/m²) | 53 | 50 | 30 | 19 | | 12 | |
| **Beispiel 5** | | | | | | | 140 |
| Schlagzähigkeit (kJ/m²) | 51 | 71 | 32 | 15 | | | |
| **Vergleichsbeispiel 5** | | | | | | | 140 |
| Schlagzähigkeit (kJ/m²) | 60 | 36 | 12 | 6 | | | |

Vergleichsbeispiel 4:   Nach 1 Tag
Vergleichsbeispiel 5:   Nach 1 Tag

**Patentansprüche**

1.  Glasfaserhaltige Polyamidformmassen auf Basis Terephthalsäure, Adipinsäure und Hexamethylendiamin mit 30-45 Gew.% Einheiten des Polyhexamethylenterephthalamids und 55 bis 70 Gew.-% Einheiten des Polyhexamethylenadipamids im Polyamid und 10-40 Gew.% an beschlichteten,alkalifreien Glasfasern in der Polyamidmasse
    dadurch gekennzeichnet, daß als Stabilisator gegen Einwirkung von Chemikalien bei höheren Temperaturen
    0,1 bis 2,5 Gew-% eines Stabilisatorgemischs aus Kupfer(I)halogeniden, Alkalihalogeniden und Triaryl-, Trialkyl- oder Tri(arylalkyl)phosphinen verwendet werden.

2.  Polyamidformmassen nach Anspruch 1, dadurch gekennzeichnet, daß in den Stabilisatoren die Kupfer-(I)halogenide Kupfer(I)bromid oder Kupfer(I)iodid und die Alkalihalogenide Lithium-, Natrium- oder Kalium-bromide oder -iodide sind und als Triarylphosphin das Triphenylphosphin verwendet wird.

3.  Polyamidformmassen nach Ansprüchen 1 und 2, dadurch gekennzeichnet, daß als Stabilisator 0,1 bis 1,5 Gew.-% einer Mischung aus Kupfer(I)iodid, Kaliumiodid und Triphenyphosphin verwendet wird.

4.  Verwendung der Polyamidformmassen gemäß wenigstens einem der vorangehenden Ansprüche zur Herstellung von bei höheren Temperaturen gegen Einwirkung von Chemikalien beständigen Formteilen.

5.  Verwendung gemäß Anspruch 4 zur Herstellung von gegen Glykol und Wasser bei höheren Temperaturen beständigen Formteilen.

6.  Verwendung der Polyamidformmassen gemäß Ansprüchen 4 und 5 zur Herstellung von Kühlerwasserkästen.


**Claims**

1.  Glass-fibre-containing polyamide moulding compounds based on terephthalic acid, adipic acid and hexamethylene diamine containing 30-45% by weight polyhexamethylene terephthalamide units and 55 to 70% by weight polyhexamethylene adipamide units in the polyamide and 10-40% by weight sized, alkali-free glass fibres in the polyamide compound, characterized in that 0.1 to 2.5% by weight of a stabilizer mixture of copper(I) halides, alkali metal halides and triaryl, trialkyl or tri(arylalkyl)phosphines is used for stabilization against the effect of chemicals at relatively high temperatures.

2.  Polyamide moulding compounds as claimed in claim 1, characterized in that, in the stabilizers, the copper(I) halides are copper(I) bromide or copper(I) iodide and the alkali metal halides are lithium, sodium or potassium bromides or iodides and triphenyl phosphine is used as the triaryl phosphine.

3.  Polyamide moulding compounds as claimed in claims 1 and 2, characterized in that 0.1 to 1.5% by weight of a mixture of copper (I) iodide, potassium iodide and triphenyl phosphine is used as stabilizer.

4.  The use of the polyamide moulding compounds as claimed in at least one of the preceding claims for the production of mouldings resistant to the effect of chemicals at relatively high temperatures.

5.  The use claimed in claim 4 for the production of mouldings resistant to glycol and water at relatively high temperatures.

6.  The use of the polyamide moulding compounds as claimed in claims 4 and 5 for the production of radiator tanks.


**Revendications**

1.  Matières à mouler en polyamides renforcées par des fibres de verre, à base d'acide téréphtalique, d'acide adipique et d'hexaméthylène-diamine, contenant 30 à 45% en poids de motifs de polyhexaméthylène-tétéphtalamide et 55 à 70% en poids de motifs de polyhexaméthylène-adipamide dans le polyamide, et 10 à 40% en poids de fibres de verre exemptes d'alcali, ensimées, dans la masse de polyamide, caractérisées en ce qu'elles contiennent, en tant que stabilisant contre l'action des produits chimiques à haute température, de 0,1 à 2,5% en poids d'un mélange stabilisant consistant en halogénures cuivreux, halogénures alcalins et triaryl-, trialkyl-ou tri-(arylalkyl)-phosphines.

2. Matières à mouler en polyamides selon la revendication 1, caractérisées en ce que les halogénures cuivreux contenus dans les stabilisants sont le bromure ou l'iodure cuivreux, les halogénures alcalins sont des bromures ou iodures de lithium, de sodium ou de potassium, et la triarylphosphine est la triphénylphosphine.

3. Matières à mouler en polyamides selon les revendications 1 et 2, caractérisées en ce que le stabilisant, utilisé en proportions de 0,1 à 1,5% en poids, est un mélange d'iodure cuivreux, d'iodure de potassium et de triphénylphosphine.

4. Utilisation des matières à mouler en polyamides selon au moins une des revendications qui précèdent pour la fabrication de pièces moulées résistant à l'action des produits chimiques à haute température.

5. Utilisation selon la revendication 4, pour la fabrication de pièces moulées résistant au glycol et à l'eau à température élevée.

6. Utilisation des matières à mouler en polyamides selon les revendications 4 et 5, pour la fabrication de réservoirs d'eau de refroidissement.